# EUROPÄISCHE PATENTSCHRIFT

(11) **EP 2 893 208 B1**
(45) Veröffentlichungstag und Bekanntmachung des Hinweises auf die Patenterteilung: **22.03.2017**
(21) Anmeldenummer: 13771053.9
(22) Anmeldetag: 04.09.2013
(51) Int. Cl.: F16D 13/64

(54) **KUPPLUNGSSCHEIBE**
CLUTCH DISC
DISQUE D'EMBRAYAGE

(30) Priorität: 07.09.2012 CN 201210330698
(43) Veröffentlichungstag der Anmeldung: 15.07.2015
(73) Patentinhaber: Schaeffler Technologies AG & Co. KG, 91074 Herzogenaurach (DE)
(72) Erfinder: BAO, Shuncheng, Shanghai 200135 (CN)
(86) Internationale Anmeldenummer: PCT/DE2013/200154
(87) Internationale Veröffentlichungsnummer: WO 2014/037003

(56) Entgegenhaltungen:
- EP-A2- 1 653 103
- CN-U- 202 746 425
- DE-A1- 2 438 809
- US-A1- 2004 245 062

## Beschreibung

Die vorliegende Erfindung betrifft eine Kupplungsscheibe und insbesondere eine Kupplungsscheibe, die in sehr staubigen Umgebungen verwendet wird.

Eine Kupplung ist in einem Schwungradgehäuse zwischen einem Motor und einem Getriebe angeordnet, und eine Antriebswelle des Getriebes verläuft durch eine Radnabe in der Kupplung, um eine drehfeste Verbindung mit der Radnabe zu schaffen. Beim Fahren eines Autos kann ein Fahrer ein Kupplungspedal nach Bedarf treten oder loslassen, um den Motor zeitweise vom Getriebe zu trennen oder allmählich mit diesem zu verbinden und dadurch die Energiezufuhr vom Motor zu einem Getriebe zu unterbinden oder zuzulassen.

In der Chinesischen Patentschrift 100504098C wird eine Kupplungsscheibe offenbart, die eine an einem Mittelpunkt angeordnete Radnabe, einen mit der Radnabe verbundenen Schwingungsdämpfer und mehrere außen angeordnete Reibungsscheiben aufweist. In der Radnabe ist ein innerer Zahnkranzteil angeordnet, der sich über eine bestimmte Strecke entlang einer axialen Richtung der Radnabe erstrecken kann, um eine drehfeste Verbindung zwischen der Radnabe und der Antriebswelle des Getriebes herzustellen. Die Reibungsscheiben stellen eine Verbindung mit einem Schwungrad eines Motors durch Reibung in der Kupplung her, und der Schwingungsdämpfer stellt eine elastische Drehverbindung der Radnabe und der Reibungsscheiben untereinander her.

Das gattungsgemäße Dokument EP 1 653 103 offenbart eine derartige Kupplungsscheibe.

Wenn die Kupplungsscheibe in sehr staubigen Umgebungen verwendet wird, kann der Staub zwischen den inneren Zahnbereich der Radnabe und der Antriebswelle des Getriebes eindringen und sich dort ablagern, wodurch die normale axiale Kopplung zwischen der Antriebswelle des Getriebes und der Radnabe der Kupplungsscheibe und daher wiederum der Normalbetrieb des gesamten Antriebssystems beeinflusst wird. Deshalb ist es erforderlich, eine verbesserte Kupplungsscheibe bereitzustellen, um das obige Problem zu lösen.

Das durch die vorliegende Erfindung zu lösende Problem besteht darin, eine Kupplungsscheibe mit einer einfachen Struktur bereitzustellen, die eine staubdichte Funktion aufweist.

Zum Lösen des obigen Problems stellt die vorliegende Erfindung eine Kupplungsscheibe bereit, die beinhaltet: eine an einem Mittelpunkt angeordnete Radnabe, einen mit der Radnabe verbundenen Schwingungsdämpfer und mehrere an einem Rand des Schwingungsdämpfers angeordnete Reibungsscheiben, wobei die Radnabe einen Grundkörper und einen Erweiterungsteil beinhaltet, der an einem Ende des Grundkörpers angeordnet ist, in dem Grundkörper mehrere sich in axialer Richtung erstreckende innere Zahnkranzteile angeordnet sind, die inneren Zahnkranzteile eine drehfeste Verbindung mit einer Antriebswelle eines Getriebes herstellen können, der Erweiterungsteil sich in axialer Richtung erstreckt und innen einen Hohlraum bildet und an einer Öffnung auf einer von den inneren Zahnkranzteilen entfernten Seite des Hohlraums ein staubdichtes Element angebracht ist.

Im Vergleich mit dem Stand der Technik weist die vorliegende Erfindung die folgenden Vorteile auf: der Hohlraum kann eine normale Verbindung zwischen den inneren Zahnkranzteilen und der Antriebswelle des Getriebes sicherstellen, und das an einer Seite des Hohlraums angebrachte staubdichte Element kann verhindern, dass Staub zwischen die inneren Zahnkranzteile und die Antriebswelle des Getriebes eindringt.

Es zeigen:
- Figur 1: eine Draufsicht auf eine Kupplung gemäß der vorliegenden Erfindung;
- Figur 2: eine Querschnittsansicht der in Figur 1 gezeigten Kupplungsscheibe entlang einer Schnittlinie A-A;
- Figur 3: ein vergrößerter Ausschnitt einer Radnabe der in Figur 2 gezeigten Kupplungsscheibe;
- Figur 4: eine Draufsicht auf eine Staubabdeckung der in Figur 2 gezeigten Kupplungsscheibe;
- Figur 5: ein vergrößerter Ausschnitt einer Radnabe der in Figur 2 gezeigten Kupplungsscheibe, nachdem eine Staubabdeckung darauf angebracht wurde;
- Figur 6: eine Draufsicht auf die Radnabe der in Figur 5 gezeigten Radnabe, nachdem eine Staubabdeckung darauf angebracht wurde;
- Figur 7: eine schematische Ansicht einer zweiten Ausführungsform der Kupplungsscheibe gemäß der vorliegenden Erfindung;
- Figur 8: eine schematische Ansicht einer dritten Ausführungsform der Kupplungsscheibe gemäß der vorliegenden Erfindung; und
- Figur 9: eine schematische Ansicht einer vierten Ausführungsform der Kupplungsscheibe gemäß der vorliegenden Erfindung.

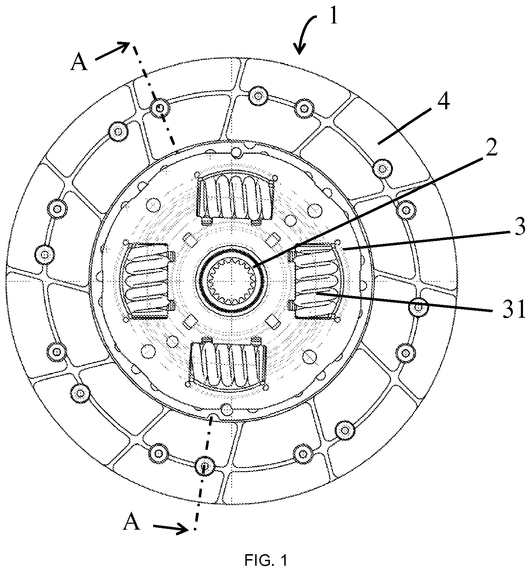

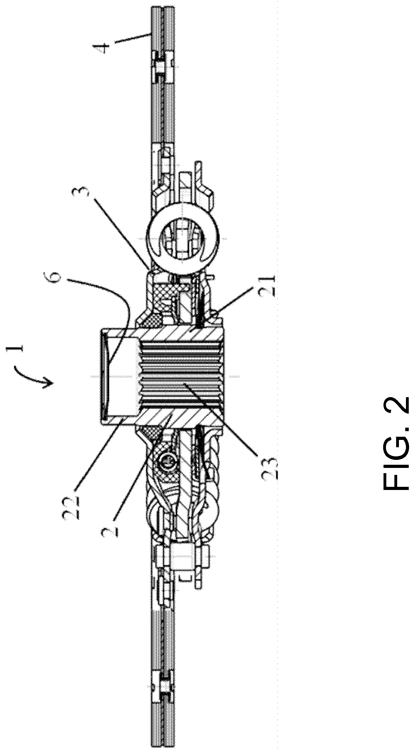

Figur 1 und Figur 2 zeigen, dass eine Kupplungsscheibe 1 der vorliegenden Erfindung eine an einem Mittelpunkt angeordnete Radnabe 2, einen mit der Radnabe 2 verbundenen Schwingungsdämpfer 3 und mehrere an einem Rand des Schwingungsdämpfers 3 angeordnete Reibungsscheiben 4 beinhaltet. Die Radnabe 2 kann eine drehfeste Verbindung mit einer Antriebswelle des Getriebes bilden, während die Radnabe 2 und die Antriebswelle des Getriebes in axialer Richtung eine normale axiale Kopplung herstellen können. In dem Schwingungsdämpfer 3 sind mehrere Federelemente 31 angebracht, und Reibungsscheiben 4 bilden durch den Schwingungsdämpfer 3 eine elastische Drehverbindung mit der Radnabe 2.

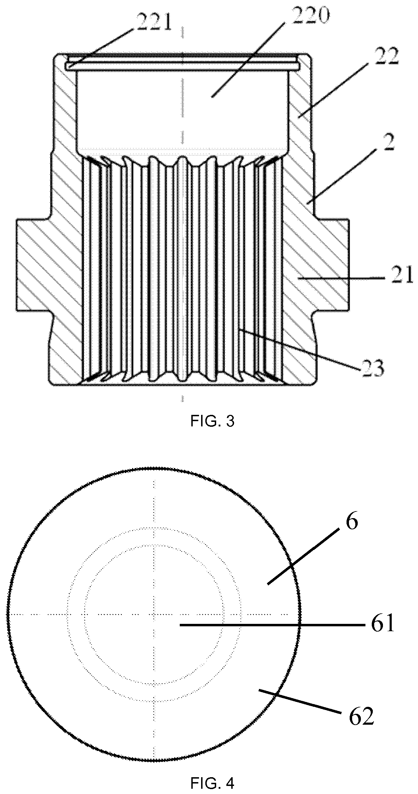

Figur 3 bis Figur 5 zeigen, dass es sich bei der Radnabe 2 um eine Hohlzylinderstruktur handelt, die einen Grundkörper 21 und einen Erweiterungsteil 22 beinhaltet, der an einem Ende des Grundkörpers 21 angeordnet ist. An einer inneren ringförmigen Wand des Grundkörpers 21 sind in Abständen innere Zahnkranzteile 23 angeordnet, die sich in axialer Richtung erstrecken, und die inneren Zahnkranzteile 23 sind in der Lage, eine drehfeste Verbindung mit der Antriebswelle des Getriebes herzustellen. Der Erweiterungsteil 22 ist oberhalb der inneren Zahnkranzteile 23 angeordnet und erstreckt sich in axialer Richtung, ein Innendurchmesser des Erweiterungsteils 22 ist größer als ein Innendurchmesser des Grundkörpers 21, und in dem Erweiterungsteil 22 ist ein Hohlraum 220 gebildet, um ein Anbringen der Antriebswelle des Getriebes zu ermöglichen. Unter normalen Umständen verläuft die Antriebswelle des Getriebes durch die Radnabe 2, um zwischen beiden eine Verbindung herzustellen, jedoch kann die Antriebswelle des Getriebes bei der vorliegenden Erfindung aufgrund des Anbringens eines staubdichten Elements nicht durch die Radnabe 2 verlaufen, sondern nur in die inneren Zahnkranzteile 232 eingreifen und teilweise in den Hohlraum 220 ragen.

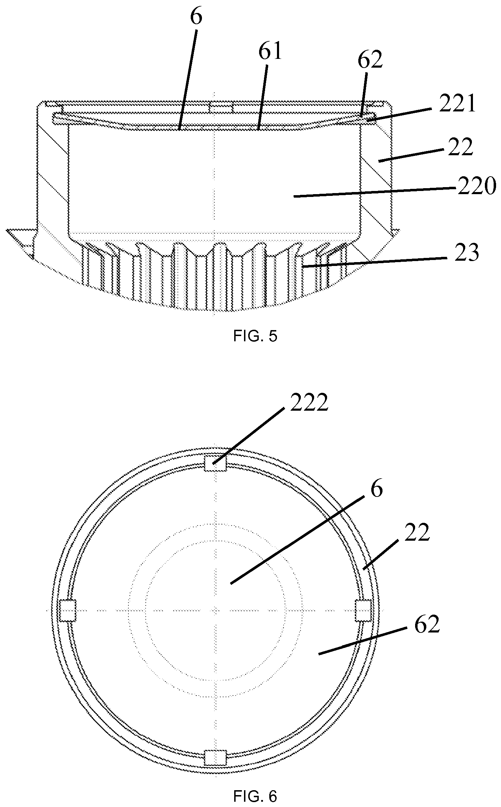

Der Erweiterungsteil 22 bildet an einer Öffnung auf einer von den inneren Zahnkranzteilen 23 entfernten Seite des Hohlraums 220 einen Aufnahmeschlitz 221, und der Aufnahmeschlitz 221 ist innerhalb des Erweiterungsteils 22 angeordnet und an der Innenseite ausgespart. Gemäß dieser Ausführungsform ist das staubdichte Element 6 aus metallischen Werkstoffen hergestellt und beinhaltet einen kreisförmigen Hauptteil 61, der an einem Mittelpunkt angeordnet ist, und einen Randteil 62, der an einem Rand des Hauptteils 61 angeordnet und leicht nach oben geneigt ist, das heißt, das staubdichte Element 6 ist scheibenförmig, in der Mitte abgesenkt und an zwei Seiten erhöht, wodurch das Einsetzen und Anbringen des staubdichten Elements 6 erleichtert wird. Nach Drücken auf das staubdichte Element 6 wird dessen Randteil 62 durch den Aufnahmeschlitz 221 aufgenommen, und um zu verhindern, dass das staubdichte Element 6 von der Radnabe 2 abfällt, sind durch Pressen auf den oberen Rand des Erweiterungsteils 22 gemäß Figur 6 mehrere gestanzte Teile 222 gebildet. Gemäß dieser Ausführungsform sind die gestanzten Teile 222 symmetrisch verteilt, wodurch die Stanzoperation vereinfacht wird und beim Einsetzen bessere Ergebnisse erreicht werden. Das staubdichte Element 6 dichtet ein Ende der Radnabe 2 ab und verhindert dadurch ein Eindringen von Staub in die inneren Zahnkranzteile 23 der Radnabe 2.

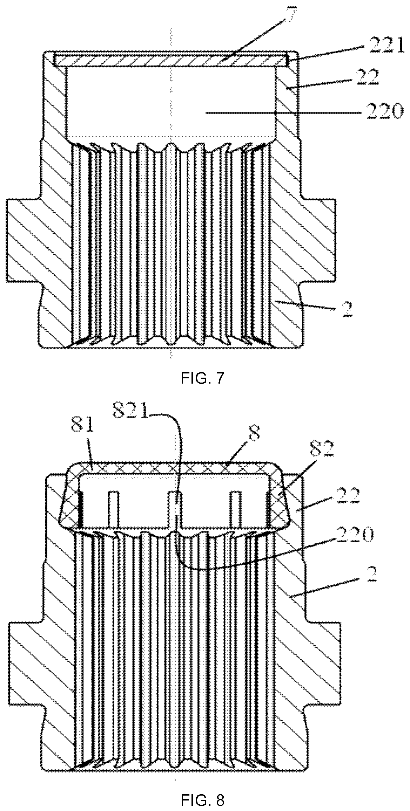

Figur 7 ist eine schematische Ansicht einer zweiten Ausführungsform der Kupplungsscheibe gemäß der vorliegenden Erfindung. Das staubdichte Element 7 ist aus kreisförmigen metallischen Werkstoffen hergestellt und wird durch starken Druck direkt in die Öffnung 221 des Leerraums 220 eingebracht. Die Verfahrensweise ist einfach, praktisch und kann ein Ende der Radnabe abdichten.

Figur 8 ist eine schematische Ansicht einer dritten Ausführungsform der Kupplungsscheibe gemäß der vorliegenden Erfindung. Das staubdichte Element 8 ist aus Kunststoffen hergestellt und wird direkt in den Hohlraum 220 eingesetzt. Das staubdichte Element 8 beinhaltet eine obere Wand 81 und eine Seitenwand 82, die in den Erweiterungsteil 22 eingreift und dadurch gebildet wird, dass sie sich von der oberen Wand 81 aus nach unten erstreckt, und die Seitenwand 82 ist mit mehreren sich nach unten erstreckenden Öffnungen 821 ausgestattet, um die Elastizität der Seitenwand 82 zu erhöhen; diese Struktur wiederum erleichtert das Einsetzen des staubdichten Elements 8 in den Hohlraum 220.

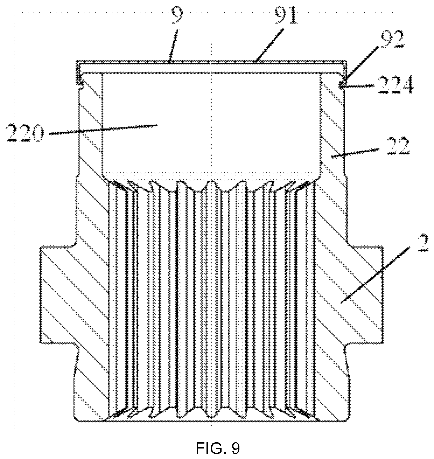

Figur 9 ist eine schematische Ansicht einer vierten Ausführungsform der Kupplungsscheibe gemäß der vorliegenden Erfindung. Das staubdichte Element 9 ist einer Kappe ähnlich und aus metallischen Werkstoffen hergestellt. Das staubdichte Element 9 weist eine obere Wand 91 und einen hakenförmigen Teil 92 auf, der durch eine Verlängerung der oberen Wand 91 gebildet wird. Die obere Wand 91 umschließt den Erweiterungsteil 22 der Radnabe 2, und der hakenförmige Teil 92 wird in einem Aufnahmeschlitz 224 gehaltert, der außerhalb der Öffnung des Erweiterungsteils 22 gebildet ist. Indem auf diese Weise ein Ende der Radnabe umschlossen wird, kann ebenfalls eine bessere Dichtwirkung erzielt werden.

Obwohl die vorliegende Erfindung nur in Verbindung mit bestimmten beispielhaften Ausführungsformen beschrieben wird, sollten die Beschreibungen lediglich als Beispiele dienen und nicht als Einschränkung zu verstehen sein. Verschiedene Änderungen sind möglich, wobei die Änderungen innerhalb des Schutzumfangs liegen, der durch die beiliegenden Ansprüche definiert ist, ohne vom Wesensgehalt und Schutzumfang der vorliegenden Erfindung abzuweichen.

## Patentansprüche

1. Kupplungscheibe (1), die eine an einem Mittelpunkt angeordnete Radnabe (2), einen mit der Radnabe verbundenen Schwingungsdämpfer (3) und mehrere an einem Rand des Schwingungsdämpfers angeordnete Reibungsscheiben (4) aufweist, wobei die Radnabe einen Grundkörper (21) und einen Erweiterungsteil (22) aufweist, der an einem Ende des Grundkörpers angeordnet ist, in dem Grundkörper mehrere innere Zahnkranzteile (23) angeordnet sind, die sich in axialer Richtung erstrecken, die inneren Zahnkranzteile in der Lage sind, eine drehfeste Verbindung mit einer Antriebswelle eines Getriebes herzustellen, **dadurch gekennzeichnet, dass** der Erweiterungsteil (22) sich in axialer Richtung erstreckt und innen einen Hohlraum (220) bildet und an einer Öffnung auf einer von den inneren Zahnkranzteilen entfernten Seite des Hohlraums ein staubdichtes Element (6) angebracht ist.

2. Kupplungsscheibe nach Anspruch 1, **dadurch gekennzeichnet, dass** ein Innendurchmesser des Grundkörpers kleiner als ein Innendurchmesser des Erweiterungsteils ist.

3. Kupplungsscheibe nach Anspruch 2, **dadurch gekennzeichnet, dass** der Erweiterungsteil einen Aufnahmeschlitz (221) innerhalb der Öffnung bildet und das staubdichte Element scheibenförmig, in der Mitte abgesenkt und an zwei Seiten erhöht ist und in dem Aufnahmeschlitz aufgenommen wird.

4. Kupplungsscheibe nach Anspruch 3, **dadurch gekennzeichnet, dass** ferner auf dem Erweiterungsteil verschiedene gestanzte Teile (222) angeordnet sind, die verhindern, dass das staubdichte Element abfällt.

5. Kupplungsscheibe nach Anspruch 4, **dadurch gekennzeichnet, dass** die gestanzten Teile symmetrisch verteilt sind.

6. Kupplungsscheibe nach Anspruch 2, **dadurch gekennzeichnet, dass** das staubdichte Element durch starken Druck direkt in die Öffnung eingebaut wird.

7. Kupplungsscheibe nach Anspruch 2, **dadurch gekennzeichnet, dass** der Erweiterungsteil einen Aufnahmeschlitz außerhalb der Öffnung bildet und das staubdichte Element einer Kappe ähnlich ist und einen Hakenteil (92) aufweist, der in dem Aufnahmeschlitz gehaltert wird.

8. Kupplungsscheibe nach einem der Ansprüche 1 bis 7, **dadurch gekennzeichnet, dass** das staubdichte Element aus metallischen Werkstoffen hergestellt ist.

9. Kupplungsscheibe nach Anspruch 2, **dadurch gekennzeichnet, dass** das staubdichte Element aus Kunststoffen hergestellt und direkt in den Hohlraum eingefügt ist.

10. Kupplungsscheibe nach Anspruch 9, **dadurch gekennzeichnet, dass** das staubdichte Element eine obere Wand (81) und eine Seitenwand (82) aufweist, die in den Erweiterungsteil eingreift und dadurch gebildet wird, dass sie sich von der oberen Wand nach unten erstreckt, und dass die Seitenwand mit mehreren sich nach unten erstreckenden Öffnungen ausgestattet ist.

## Claims

1. Clutch disc (1), which has a wheel hub (2) arranged at a central point, a vibration damper (3) connected to the wheel hub, and multiple friction discs (4) arranged at an edge of the vibration damper, wherein the wheel hub has a main body (21) and has an extension part (22) which is arranged on one end of the main body, multiple internal toothed-ring parts (23) are arranged in the main body, which internal toothed-ring parts extend an axial direction, the internal toothed-ring parts are capable of producing a rotationally conjoint connection to a drive-input shaft of a gearbox, **characterized in that** the extension part (22) extends in the axial direction and forms a cavity (220) at the inside, and a dust-tight element (6) is fitted on an opening on a side of the cavity which is remote from the internal toothed-ring parts.

2. Clutch disc according to Claim 1, **characterized in that** an internal diameter of the main body is smaller than an internal diameter of the extension part.

3. Clutch disc according to Claim 2, **characterized in that** the extension part forms a receiving slot (221) within the opening, and the dust-tight element is of disc-shaped form so as to be recessed in the centre and elevated at two sides and is received in the receiving slot.

4. Clutch disc according to Claim 3, **characterized in that**, furthermore, on the extension part, there are arranged various punched parts (222) which prevent the dust-tight element from falling off.

5. Clutch disc according to Claim 4, **characterized in that** the punched parts are distributed symmetrically.

6. Clutch disc according to Claim 2, **characterized in that** the dust-tight element is installed directly into the opening under the action of intense pressure.

7. Clutch disc according to Claim 2, **characterized in that** the extension part forms a receiving slot outside the opening, and the dust-tight element is similar to a cap and has a hook part (92) which is retained in the receiving slot.

8. Clutch disc according to one of Claims 1 to 7, **characterized in that** the dust-tight element is produced from metallic materials.

9. Clutch disc according to Claim 2, **characterized in that** the dust-tight element is produced from plastics and is fitted directly into the cavity.

10. Clutch disc according to Claim 9, **characterized in that** the dust-tight element has an upper wall (81) and a side wall (82) which engages into the extension part and which is formed **in that** it extends downward from the upper wall, and **in that** the side wall is equipped with multiple downwardly extending openings.

## Revendications

1. Disque d'embrayage (1) qui présente un moyeu de roue (2) disposé en un point central, un amortisseur de vibrations (3) relié au moyeu de roue et plusieurs disques de frottement (4) disposés sur un bord de l'amortisseur de vibrations,
le moyeu de roue présentant un corps de base (21) et une partie d'élargissement (22) disposée à une extrémité du corps de base,
plusieurs parties intérieures (23) de couronne dentée étant disposées dans le corps de base et s'étendant dans la direction axiale, les parties intérieures de couronne dentée étant en mesure d'établir une liaison à rotation solidaire avec un arbre d'entraînement d'une transmission,
**caractérisé en ce que**
la partie d'élargissement (22) s'étend dans la direction axiale et forme une cavité intérieure (220) et
**en ce qu'**un élément (6) étanche aux poussières est disposé sur une ouverture située sur un côté de la cavité éloigné des pièces intérieures de couronne dentée.

2. Disque d'embrayage selon la revendication 1, **caractérisé en ce que** le diamètre intérieur du corps de base est inférieur au diamètre intérieur de la partie d'élargissement.

3. Disque d'embrayage selon la revendication 2, **caractérisé en ce que** la partie d'élargissement forme à l'intérieur de l'ouverture une fente de réception (221) et **en ce que** l'élément étanche aux poussières a la forme d'un disque abaissé en son milieu et rehaussé sur deux côtés, reçus dans la fente de réception.

4. Disque d'embrayage selon la revendication 3, **caractérisé en ce que** différentes pièces estampées (222) sont en outre disposées sur la partie d'élargissement et empêchent que l'élément étanche aux poussières se détache.

5. Disque d'embrayage selon la revendication 4, **caractérisé en ce que** les pièces estampées sont réparties symétriquement.

6. Disque d'embrayage selon la revendication 2, **caractérisé en ce que** l'élément étanche aux poussières est monté directement dans l'ouverture par une forte poussée.

7. Disque d'embrayage selon la revendication 2, **caractérisé en ce que** l'élément d'élargissement forme une fente de réception à l'extérieur de l'ouverture et **en ce que** l'élément étanche aux poussières est similaire à un capuchon et présente une pièce en crochet (92) qui est maintenue dans la fente de réception.

8. Disque d'embrayage selon l'une des revendications 1 à 7, **caractérisé en ce que** l'élément étanche aux poussières est réalisé en matériaux métalliques.

9. Disque d'embrayage selon la revendication 2, **caractérisé en ce que** l'élément étanche aux poussières est réalisé en matière synthétique et est inséré directement dans la cavité.

10. Disque d'embrayage selon la revendication 9, **caractérisé en ce que** l'élément étanche aux poussières présente une paroi supérieure (81) et une paroi latérale (82) qui s'engage dans la partie d'élargissement et qui est formée par le fait qu'elle prolonge vers le bas la paroi supérieure, et **en ce que** la paroi latérale est équipée de plusieurs ouvertures s'étendant vers l'intérieur.
